(19) Europäisches Patentamt

European Patent Office

Office européen des brevets

(11) **EP 1 259 041 A1**

(12) **EUROPEAN PATENT APPLICATION**

(43) Date of publication:
20.11.2002 Bulletin 2002/47

(51) Int Cl.[7]: **H04L 27/00**

(21) Application number: **01111672.0**

(22) Date of filing: **14.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sony International (Europe) GmbH**
**10785 Berlin (DE)**

(72) Inventors:
• **Wildhagen, Jens,**
**c/o Advanced Technology Center**
**70327 Stuttgart (DE)**

• **Nöthlings, Rolf,**
**c/o Advanced Technology Center**
**70327 Stuttgart (DE)**

(74) Representative: **Müller - Hoffmann & Partner Patentanwälte,**
**Innere Wiener Strasse 17**
**81667 München (DE)**

(54) **Method and apparatus to determine a modulation type of a short wave broadcast signal**

(57)     In shortwave broadcasting, different modulation types are already used or under development. A method and apparatus is proposed according to which the used modulation type is automatically detected on basis of output signals of a frequency demodulation and a single sideband demodulation of the received signal in order to allow a receiver to apply the correct demodulation.

Figure 1

**Description**

The present invention relates to a method and apparatus to determine a modulation type of a short wave broadcast signal, which is in particular capable of distinguishing between a double sideband modulation (DSB), a single sideband modulation (SSB), and a digital modulation (DRM).

In short wave broadcasting, different types of modulation are already used or under development. These modes, currently DSB, SSB, DRM, share the same frequency bands. Therefore, it is desired that a used mode, i.e. modulation type, can be detected automatically by the receiver in order to apply the right demodulation.

Therefore, it is the object underlying the present invention to provide a method and apparatus to determine a modulation type of a short wave broadcast signal, so that a receiver equipped therewith can decide which modulation is used for a received broadcast signal.

This object is solved by a method according to independent claim 1 and an apparatus according to independent claim 14. Preferred embodiments thereof are respectively defined in the respective following subclaims.

Therewith, according to the present invention, a modulation type of a short wave broadcast signal is determined using a frequency demodulation and a single sideband demodulation of the received and eventually preprocessed broadcast signal. The output signals of the frequency demodulation and the single sideband demodulation show features based on which analysis the modulation type of the received short wave broadcast signal can be determined, in particular it is possible to distinguish between a double sideband modulation, a single sideband modulation, and a digital modulation.

The analysis of eventually processed output signals of a frequency demodulator and a single sideband demodulator is performed by a logic circuit which might be designed to consider hard decisions based on the input values to generate an output signal indicating the modulation type. Alternatively, these hard decisions can be replaced by soft decisions, e.g. a fuzzy logic, or an enhanced logic taking the levels of the input signals themselves into account, since these values can indicate whether a decision will be reliable or not.

According to the present invention, preferably a field strength indicator is used to decide if there is any signal received or not. If the field strength exceeds a certain threshold, the received signal is supposed to be an information signal to be demodulated.

According to the present invention, preferably the broadcast signal is determined to be double sideband modulated in case a level of an output signal of the frequency demodulation lies below a predetermined threshold.

Further preferably, a detected carrier within the received broadcast signal is used to additionally confirm this result. The carrier detection additionally to the threshold decision to detect a double sideband modulated broadcast signal is in particular advantageous in case the double sideband modulated broadcast signal is affected by heavy wide noise, since in this case the threshold decision might eventually be disturbed and therefore an enhancement of the reliability might be desired. The carrier detection can be realized by filtering the received signal with a narrow lowpass and comparing the energy of the resulting signal with the energy of the complete signal in order to determine whether there was much energy filtered, i.e. a carrier is within the pass band of the lowpass, or not. This lowpass filter would cause an additional group delay, so that the overall system would become slower. However, as there might be some DRM transmitters which will use a carrier as well in the beginning, the existing of a carrier is not a sufficient criterium to determine a double sideband modulated broadcast signal itself.

Therefore, the highpass filtered output signal of the frequency demodulator indicates whether the received short wave broadcast signal which is input into the frequency demodulator is a double sideband modulated signal or not, since in a double sideband modulated signal only the amplitude of a carrier is modulated and not its frequency. Therefore, in case a double sideband modulated signal is input into the frequency demodulator, the output of the succeeding highpass filter should ideally be zero. There might be a frequency component because of a possible frequency offset of the carrier, but this component is almost a DC component and therewith eliminated by the highpass filter. Since the single sideband modulated signal as well as the digital modulated DRM (Digital Radio Mondial) signal have frequency modulated components, the received signal is supposed to be a double sideband modulated signal if (almost) no signal is detectable after the highpass filtering of the output signal of the frequency demodulator.

According to the present invention, preferably said broadcast signal is determined to be single sideband modulated in case a level of an output signal of the frequency demodulation lies above a predetermined threshold and a sideband level of one of the output signals of the single sideband demodulation is at least a predetermined amount higher than a sideband level of the other one.

Still further, according to the present invention, preferably said broadcast signal is determined to be digitally modulated in case a level of an output signal of the frequency demodulation lies above a predetermined threshold and a sideband level of one of the output signals of the single sideband demodulation is not at least a predetermined amount higher than a sideband level of the other one.

The single sideband demodulation according to the present invention generates two output signals, namely a lower sideband signal LSB and an upper sideband USB. In case it is determined that the broadcast signal is no double sideband modulated signal and the sideband level of one of the sideband signals is much higher than the other one, a single sideband modulated signal is received. In case no double sideband modulated broadcast signal and no single sideband modulated broadcast signal is received, a digitally modulated broadcast is received.

Therewith, the present invention achieves the advantages that a receiver incorporating the present invention can detect the modulation type of a short wave broadcast signal within the autotuning, since the detection is very fast, it is in particular faster than starting a DRM decoding and analysing its results. Further, no coherent signal is needed for the determination of the modulation type which is reliable independent whether a PLL (Phase Locked Loop) is locked to the received broadcast signal or not.

According to the present invention, preferably a sideband level of an output signal of the single sideband demodulation is determined on basis of a respective highpass filtered output of the single sideband demodulation. This highpass filtering is performed to avoid that a possible carrier may affect the comparability of both sidebands, since a possible carrier would only appear in one sideband, as the input signal does not need to be coherent.

The comparison of both highpass filtered output signals of the single sideband demodulation is preferably performed by generating a difference or quotient signal thereof. Of course, any other comparison strategy can also be used in an equivalent manner.

According to the invention, further preferably said sideband level determination is respectively performed by lowpass filtering a squared highpass filtered output signal of the single sideband demodulation or by determining an energy thereof.

The level determination of the frequency demodulated received broadcast signal is preferably performed by determining whether or not the level of a highpass filtered output signal of the frequency demodulation lies below a predetermined threshold. Further preferably, said level determination is performed by lowpass filtering the squared highpass filtered output signal of the frequency demodulation or by determining an energy thereof.

These threshold decisions according ot the present invention have the particular advantage that a binary, i.e. YES or NO decision, is achieved in a very easy manner. In particular, a signal can easily be detected, since it can easily be determined if the output of a respective lowpass filter differs significantly from zero.

The thresholds indicating if there is a signal or not or if the signal has a similar level or not can easily be adjusted according to empirical values. Further, these thresholds might be changed according to different reception conditions.

Further features and advantages of the method and apparatus to determine a modulation type of a shortwave broadcast signal according to the present invention will become apparent from the following detailed description of an exemplary embodiment thereof taken in conjunction with the accompanying drawings, wherein

**Fig. 1** shows a preferered embodiment of a DSB/ SSB/DRM mode detector according to the present invention;

**Fig. 2** shows the spectrum of a received DSB broadcast signal;

**Fig. 3** shows the spectrum of a received SSB broadcast signal; and

**Fig. 4** shows the spectrum of a DRM broadcast signal.

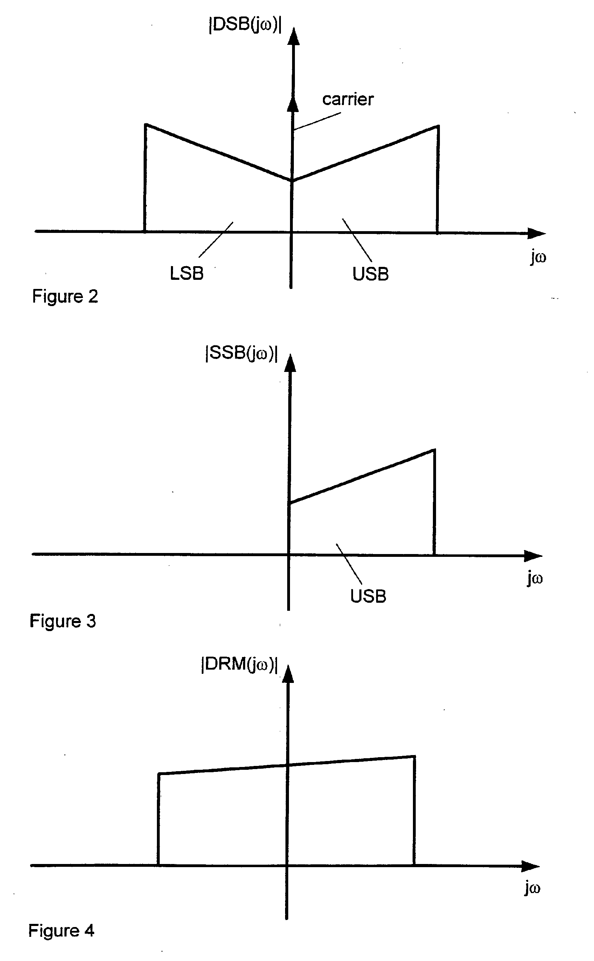

Figs. 2 to 4 show the spectra of a double sideband modulated, a single sideband modulated and a digitally modulated, i.e. DRM, short wave broadcast signal, i.e. a respective absolute value of the broadcast signal versus the frequency, here versus the complexe frequency $j\omega$.

Fig. 2 shows that a double sideband modulated broadcast signal comprises a lower sideband LSB adjacent to an upper sideband USB with a carrier signal at a specific frequency, here at $j\omega = 0$. Fig. 3 shows that a single sideband modulated shortwave broadcast signal comprises only an upper sideband signal USB. Alternatively, a single sideband modulated shortwave broadcast signal might comprise only a lower sideband signal LSB. Therefore, the single sideband modulated shortwave broadcast signal transmits the same information as the double sideband modulated shortwave broadcast signal, but without the redundancy.

Fig. 4 shows that a digitally modulated DRM shortwave broadcast signal carries information in the same frequency range as the double sideband modulated shortwave broadcast signal, but no distinction between a lower sideband signal and an upper sideband signal (which carry the same information content in case of a double sideband modulated broadcast signal, respectively) is made.

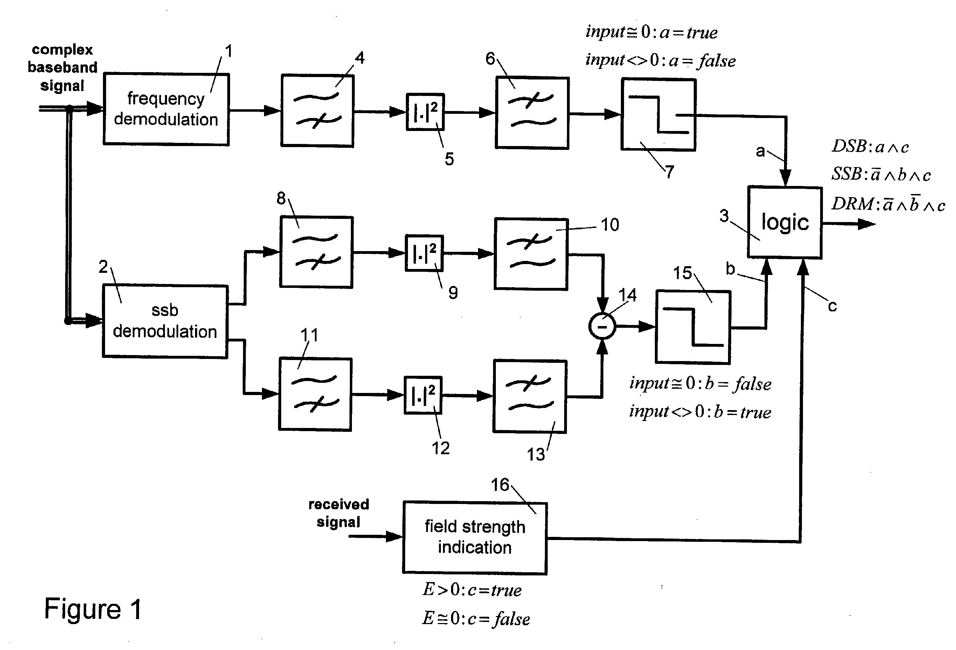

Fig. 1 shows a DSB/SSB/DRM mode detector according to an exemplary preferred embodiment of the present invention. The complex baseband signal of the received signal is input to a frequency demodulation path and a single sideband demodulation path which respectively output an indication signal to a logic circuit 3 which determines the modulation type of the received signal based on said both indication signals from the frequency demodulation path and the single sideband demodulation path. Additionally, the logic circuit 3 receives the field strength indication signal c from a field strength indicator 16 receiving the received signal.

As will be apparent from the general description given above and following description of the exemplary embodiment, the field strength indication signal c is not used to distinguish in which mode, i.e. modulation type, the received shortwave broadcast signal is transmitted, but to determine if there is any signal received or not. Therefore, the field strength indication signal c which is shown to be input to the logic circuit 3 in Fig. 1 contributes to the logic determination only in that a modulation type is only output in case a signal is received. Therefore, the field strength indication signal c might e. g alternatively or additionally be used to enable the frequency demodulation and/or single sideband demodulation, or the field strength indication signal c might be derived alternatively from the frequency demodulation path or single sideband demodulation path.

The frequency demodulation path comprises a series connection of a frequency demodulator 1, a first highpass filter 4, a first squaring unit 5, a first lowpass filter 6, and a first threshold decision stage 7. The frequency demodulator 1 performs a frequency demodulation of the complexe baseband signal. The resulting signal is highpass filtered to remove a possibly included carrier so that a following signal level determinator 5, 6, here consisting of a squaring unit 5 and a lowpass filter 6, can determine whether the frequency demodulated shortwave broadcast signal comprises any frequency modulated components. If this is the case, i.e. if the signal level determinator determines a signal level differing significantly from zero, a following threshold decision unit 7 outputs a first indication signal a to the logic circuit indicating false, i.e. a = false. Otherwise, if the signal level determinator determines the output of the first highpass filter to be zero or nearly zero, the first threshold decision unit 7 outputs a first indication signal a indicating true, i.e. a = true, to the logic circuit 3.

The single sideband demodulation path consists of single sideband demodulator 2 which outputs an upper sideband signal USB and a lower sideband signal LSB. Each of these both signals is input to a series connection of a respective second lowpass filter 8; 9 and sideband level determinator 9, 10; 12, 13, which respectively comprise a squaring unit 9; 12 receiving the output signal of the respective second highpass filter 8; 11 and outputting its output signal to a respective second lowpass filter 10; 13. The output signals of the sideband level determinators 9, 10; 12, 13 are input to a second comparator 14, 15 which outputs a signal indicating if the level in one of the sidebands is much higher than in the other one or not. In the shown case, this second comparator 14, 15 consists of a subtractor 14 receiving both output signals of the sideband level determinators 9, 10; 12, 13 which substracts one of its input signals from the other and outputs the resulting difference signal to a second threshold determination unit 15 which outputs the second indication signal b to the logic circuit 3 which is set true in case the difference signal differs significantly from zero, i.e. b = true, and which is set false in case the input difference signal is more or less equal to zero, i.e. b = false.

The logic circuit 3 is generating its output signal according to the following rules:

- If there is no output signal of the frequency demodulation path, the received signal is DSB modulated, i.e. if a = true.
- If there is an output signal detected in the frequency demodulation path and both single sideband signals have a significantly different level, the received signal is SSB modulated, i.e. if a = false and b = true.
- If there is an output signal detected in the frequency demodulation path and both single sideband signals have a similar level, the received signal is digitally modulated (DRM), i.e. if a = false and b = false.

Under consideration of the field strength indication, i.e. that a modulation type determination is only performed in case a signal is present, and under the assumption that the field strength indication signal c is set true in case a signal is received (the energy E of a signal is considerably higher than zero), i.e. c = true, and is set false in case no signal is received (the energy E of a received signal is more or less equal to zero), c = false, the logic circuit indicates a double sideband signal in case $a \wedge c$, i.e. "a and c" are true, indicates a single sideband signal in case $\bar{a} \wedge b \wedge c$, i.e. "$\bar{a}$ and b and c" is true, and indicates a DRM signal in case $\bar{a} \wedge \bar{b} \wedge c$, i.e. "$\bar{a}$ and $\bar{b}$ and c" is true.

**Claims**

1. Method to determine a modulation type of a short wafe broadcast signal, **characterized by**

   - a frequency demodulation of a received and eventually preprocessed broadcast signal, and
   - a single sideband demodulation of said received and preprocessed broadcast signal

   to determine the modulation type of said received and preprocessed broadcast signal on basis of an analysis of the respective output signals of the frequency and single sideband demodulations.

2. Method according to claim 1, **characterized by** distinguishing between a double sideband modulation, a single sideband modulation, and a digital modulation.

3. Method according to claim 1 or 2, **characterized in that** said broadcast signal is determined to be double sideband modulated in case a level of an output signal of the frequency demodulation lies below a predetermined threshold.

4. Method according to claim 3, **characterized in that** said broadcast signal is determined to be double sideband modulated in case a carrier is detected within the received broadcast signal.

5. Method according to claims 3 or 4, **characterized in that** said level determination of an output signal of the frequency demodulation is performed by determining whether or not the level of a highpass filtered output signal of the frequency demodulation lies below a predetermined threshold.

6. Method according to claim 5, **characterized in that** said level determination is performed by lowpass filtering the squared highpass filtered output signal of the frequency demodulation or by determining an energy thereof.

7. Method according to anyone of the preceding claims, **characterized in that** said broadcast signal is determined to be single sideband modulated in case a level of an output signal of the frequency demodulation lies above a predetermined threshold and a sideband level of one of the output signals of the single sideband demodulation is at least a predetermined amount higher than a sideband level of the other one.

8. Method according to anyone of the preceding claims, **characterized in that** said broadcast signal is determined to be digitally modulated in case a level of an output signal of the frequency demodulation lies above a predetermined threshold and a sideband level of one of the output signals of the single sideband demodulation is not at least a predetermined amount higher than a sideband level the other one.

9. Method according to claim 7 or 8, **characterized in that** a sideband level of an output signal of the single sideband demodulation is determined on basis of a respective highpass filtered output signal of the single sideband demodulation.

10. Method according to claim 9, **characterized in that** the comparison of said both highpass filtered output signals of the single sideband demodulation is performed by generating a difference or quotient signal thereof.

11. Method according to claim 9 or 10, **characterized in that** said sideband level determination is respectively performed by lowpass filtering a squared highpass filtered output signal of the single sideband demodulation or by determining an energy thereof.

12. Method according to anyone of the preceding claims, **characterized in that** said frequency demodulation and single sideband demodulation as well as said analysis of the respective output signals of the frequency and single sideband demodulations are only performed after a fieldstrength of the received broadcast signal exceeded a predetermined threshold.

13. Method according to anyone of the preceding claims, **characterized in that** said frequency demodulation and single sideband demodulation are performed on basis of a complex baseband signal corresponding to said received broadcast signal.

14. Apparatus to determine a modulation type of a short wafe broadcast signal, **characterized by**

   - a frequency demodulator (1) receiving a received and eventually preprocessed broadcast signal,
   - a single sideband demodulator (2) receiving said received and preprocessed broadcast signal, and
   - a logic circuit (3) to determine a modulation type of said received and preprocessed broadcast signal on basis of an analysis of the respective output signals of the frequency demodulator (1) and the single sideband demodulator (2).

15. Apparatus according to claim 14, **characterized in that** said logic circuit (3) outputs a signal indicating a double sideband modulation, a single sideband modulation, or a digital modulation.

16. Apparatus according to claim 14 or 15, **characterized by** a series connection of a first highpass filter (4), a signal level determinator (5) and a first level comparator (6) receiving the output signal of the frequency demodulator (1) and generating a first indication signal (a) input to said logic circuit (3) and indicating whether or not a level of an output signal of the frequency demodulator (1) lies below a predetermined threshold.

17. Apparatus according to claim 16, **characterized by** a carrier detector receiving the received broadcast signal and supplying a carrier detection signal to said logic circuit (3).

18. Apparatus according to anyone of the preceding claims 14 to 17, **characterized by** a respective sideband level determinator (9, 10; 12, 13) receiving a respective one of the output signals of the single sideband demodulator (1) and outputting a generated sideband level signal to a second level comparator (14, 15) generating a second indication signal (b) input to said logic circuit (3) and indicating whether or not a level difference of said generated sideband level signals lies above a predetermined threshold.

**19.** Apparatus according to claim 18, **characterized by** a respective highpass filter (8; 11) connected before each of said sideband level determinators (9, 10; 12, 13).

**20.** Apparatus according to anyone of claims 18 or 19, **characterized in that** said second comparator (14, 15) comprises a subtracter (14) to generate the difference signal of said sideband level signals or a divider to generate the quotient signal of said sideband level signals.

**21.** Apparatus according to anyone of claims 16 to 20, **characterized in that** said signal level determinator (5, 6) and/or said sideband level determinators (9, 10; 12, 13) comprise either a squaring unit (5; 9, 12) followed by a lowpass filter (6; 10; 13) or an energy determinator.

**22.** Apparatus according to anyone of claims 14 to 21, **characterized by** a fleldstrength indicator (16) inputting a fieldstrength indication signal (c) to said logic circuit (3).

**23.** Apparatus according to anyone of claims 14 to 22, **characterized by** a signal preprocessing unit generating a complex baseband signal from said received broadcast signal to be input to said frequency demodulator (1) and said single sideband demodulator (2).

Figure 1

$input \cong 0 : a = true$

$input <> 0 : a = false$

complex baseband signal

frequency demodulation 1

$|\cdot|^2$ 5

4

6

7

$DSB: a \wedge c$

$SSB: \overline{a} \wedge b \wedge c$

$DRM: \overline{a} \wedge \overline{b} \wedge c$

a

3 logic

ssb demodulation 2

8

$|\cdot|^2$ 9

10

11

$|\cdot|^2$ 12

13

14

15

b

c

$input \cong 0 : b = false$

$input <> 0 : b = true$

received signal

field strength indication 16

$E > 0 : c = true$

$E \cong 0 : c = false$

EP 1 259 041 A1

Figure 2

Figure 3

Figure 4

**European Patent Office**

## EUROPEAN SEARCH REPORT

Application Number

EP 01 11 1672

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CALLAGHAN T G ET AL: "SAMPLING AND ALGORITHMS AID MODULATION RECOGNITION" MICROWAVES AND RF, PENTON PUBLISHING, HASBROUCK HEIGHTS, NJ, US, vol. 24, no. 9, September 1985 (1985-09), pages 117-119,121, XP000763996 ISSN: 0745-2993 * figure 2 * | 1-23 | H04L27/00 |
| A | AZZOUZ E E ET AL: "Procedure for automatic recognition of analogue and digital modulations" IEE PROCEEDINGS: COMMUNICATIONS, INSTITUTION OF ELECTRICAL ENGINEERS, GB, vol. 143, no. 5, October 1996 (1996-10), pages 259-266, XP006006273 ISSN: 1350-2425 * page 261, left-hand column, last paragraph * * section 2.2.3 * | 1-23 | |
| A | US 4 227 255 A (CARRICK ROBERT L ET AL) 7 October 1980 (1980-10-07) * column 3, line 60 - line 63 * * column 4, line 12 - line 14 * * column 5, line 10 - line 19 * * column 6, line 10 - line 17 * | 1-23 | TECHNICAL FIELDS SEARCHED (Int.Cl.7) H04L |

The present search report has been drawn up for all claims

| Place of search | Date of completion of the search | Examiner |
|---|---|---|
| THE HAGUE | 22 October 2001 | Orozco Roura, C |

## ANNEX TO THE EUROPEAN SEARCH REPORT
## ON EUROPEAN PATENT APPLICATION NO.

EP 01 11 1672

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2001

| Patent document cited in search report | Publication date | Patent family member(s) | Publication date |
|---|---|---|---|
| US 4227255 A | 07-10-1980 | NONE | |

EPO FORM P0459